# EUROPEAN PATENT APPLICATION

(11) **EP 2 354 944 A2**
(43) Date of publication of application: **10.08.2011**
(21) Application number: 11152262.9
(22) Date of filing: 26.01.2011
(51) Int. Cl.: G06F 9/52, G06F 11/00

(54) **Parallel computer system and method for controlling parallel computer system**

(30) Priority: 02.02.2010 JP 2010021423
(71) Applicant: FUJITSU LIMITED, Kawasaki-shi, Kanagawa 211-8588 (JP)
(72) Inventor: Moroo, Jun, Kawasaki-shi Kanagawa 211-8588 (JP); Yamada, Masahiko, Kawasaki-shi Kanagawa 211-8588 (JP)
(74) Representative: Lewin, David Nicholas

(57) **Abstract**

A parallel computer system includes a first, a second, and a third apparatuses. The first apparatus includes a first arithmetic processing unit that stores first information regarding execution of a first program stored in a first area of a first storage device in a second area of the first storage device, outputs the first information, and sends a first notification of output of the first information. The second apparatus includes a second arithmetic processing unit that stores second information regarding execution of a second program stored in a third area of a second storage device in a fourth area of the second storage device, receives the first notification from the first apparatus, and outputs the second information. The third apparatus includes a third arithmetic processing unit that stores the first information and the second information in a third storage device.

## Description

### FIELD

The embodiments discussed herein are related to a parallel computer system and a method for controlling a parallel computer system.

### BACKGROUND

Nowadays, a parallel computer system such as a super computer or the like including a plurality of information processing apparatuses is developed in order to implement a large scale computing process for a structural analysis, a weather forecast and the like. In the parallel computer system, the plurality of information processing apparatuses which are connected with one another over a network perform computation in parallel with one another so as to implement a vast amount of arithmetic processing in a fixed time.

In the parallel computer system, the computing process is divided into several parts (processes) and the divided processes are allocated to respective information processing apparatuses. The respective information processing apparatuses implement the computing processes allocated thereto in parallel with other information processing apparatuses while synchronizing therewith. A result of the computing process implemented by the information processing apparatuses is utilized in the computing processes implemented by other information processing apparatuses.

It is not required for most information processing apparatuses to store results of arithmetic processing that the information processing apparatuses have implemented in a hard disk drive (HDD) in order to permanently save them. Therefore, the parallel computer system includes diskless information processing apparatuses with no HDD in order to cut down the expenses for HDDs and to save trouble and time for management of the HDDs.

The parallel computer system also includes disk-attached information processing apparatuses, each including an HDD. The disk-attached information processing apparatus stores a result of the computing process implemented by the parallel computer system and a program executed by the diskless information processing apparatus in the HDD included therein. The disk-attached information processing apparatus sends an image file to the diskless information processing apparatus. The image file is a file including the contents and the structure of a file system concerned. The diskless information processing apparatus stores the image file received from the disk-attached information processing apparatus into a memory included therein which serves as a main memory and executes a program included in the image file to implement the allocated computing process.

In some cases, the diskless information processing apparatus stores information relating to the allocated computing process in its memory. Related information of the type as mentioned above includes a data log. The data log is data which includes data of a time taken for the diskless information processing apparatus to implement the allocated computing process and which may be used to count a time for which the parallel computer system has been used and to calculate a charge involved. In general, the storage size of the memory included in the diskless information processing apparatus is smaller than that of the HDD. Thus, it may be desirable for the diskless information processing apparatus that has stored a fixed amount of data logs in its memory to send the data logs stored in its memory to a disk-attached information processing apparatus so as to release the data logs from its memory.

Japanese Laid-open Patent Publication No. 07-201190, Japanese Laid-open Patent Publication No. 08-77043, and Japanese Laid-open Patent Publication No. 09-237207 disclose related techniques.

### SUMMARY

It is preferable to provide a parallel computer system and a method for controlling a parallel computer system that may reduce a time delay in implementation of a computing process.

According to an aspect of the present invention, provided is a parallel computer system including a first information processing apparatus, a second information processing apparatus, and a third information processing apparatus.

The first information processing apparatus includes a first storage device and a first arithmetic processing unit. The first storage device stores a first program in a first area of the first storage device. The first arithmetic processing unit stores first information regarding execution of the first program in a second area of the first storage device, outputs the first information, and sends a first notification of output of the first information.

The second information processing apparatus includes a second storage device and a second arithmetic processing unit. The second storage device stores a second program in a third area of the second storage device, The second arithmetic processing unit stores second information regarding execution of the second program in a fourth area of the second storage device, receives the first notification from the first information processing apparatus, and outputs the second information.

The third information processing apparatus includes a third storage device and a third arithmetic processing unit. The third arithmetic processing unit stores the first information received from the first information processing apparatus and the second information received from the second information processing apparatus in the third storage device.

### BRIEF DESCRIPTION OF DRAWINGS

FIG. 1 is a diagram illustrating an example of a configuration of a parallel computer system according to an embodiment of the present invention;

FIG. 2 is a diagram illustrating an example of a hardware configuration of an information processing apparatus according to an embodiment of the present invention;

FIG. 3 is a diagram illustrating an example of a configuration of a processor core according to an embodiment of the present invention;

FIG. 4 is a diagram illustrating an example of a detailed configuration of a communication controller according to an embodiment of the present invention;

FIG. 5 is a diagram illustrating an example of memory areas of a main memory of a computing node according to an embodiment of the present invention;

FIG. 6 is a diagram illustrating an example of computing processes and communication processes implemented by a plurality of computing nodes according to an embodiment of the present invention;

FIG. 7 is a diagram illustrating examples of a time chart for log output processes implemented by a plurality of computing nodes according to an embodiment of the present invention;

FIG. 8 is a diagram illustrating an example of a time chart for log output processes implemented by a plurality of computing nodes according to an embodiment of the present invention;

FIG. 9 is a diagram illustrating an example of a synchronization process of computing nodes implemented after a data log has been output according to an embodiment of the present invention;

FIG. 10 is a diagram illustrating an example of an operation flow of a log output process based on a size of each data log according to an embodiment of the present invention; and

FIG. 11 is a diagram illustrating an example of an operation flow of a log output process based on error detection according to an embodiment of the present invention.

### DESCRIPTION OF EMBODIMENTS

Implementation of a process of sending a data log from a diskless information processing apparatus to a disk-attached information processing apparatus may cause a delay in implementation of the computing process allocated to the diskless information processing apparatus. In addition, since the respective diskless information processing apparatuses implement arithmetic processing in synchronization with one another, in some cases, a delay in implementation of the computing process by one diskless information processing apparatus may cause a delay in implementation of the computing process by another diskless information processing apparatus. Thus, if implementation of the computing processes allocated to respective devices is delayed at different timings, respective delay times may be cumulated to cause a delay of the entire process time of the parallel computer system. Currently, large scale parallel computer systems may include scores of thousands of information processing apparatuses. Thus, a short-time delay of one information processing apparatus may cause a long-time delay in implementation of a process by a large scale parallel computer system.

The parallel computer system and the method for controlling the parallel computer system according to the embodiments discussed herein may reduce a time delay in implementation of a computing process.

Embodiments of the parallel computer system and the method for controlling a parallel computer system will be discussed with reference to the accompanying drawings.

<Configuration of Parallel Computer System>

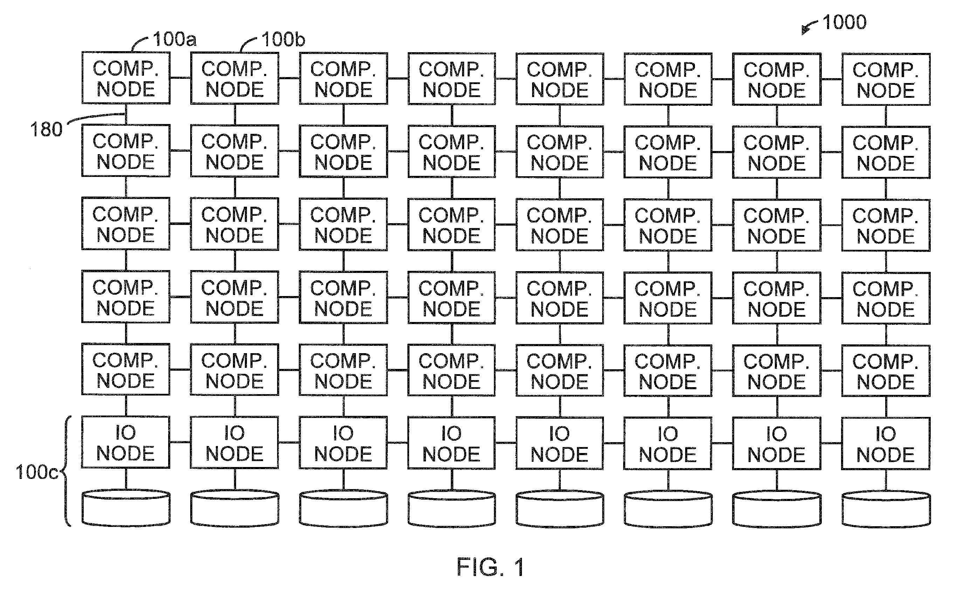

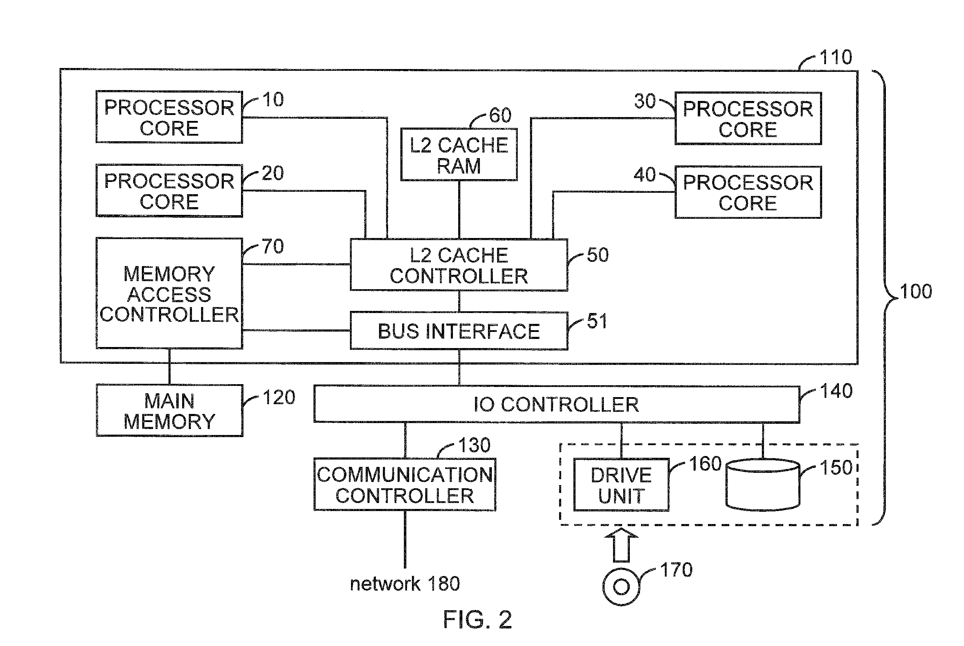

FIG. 1 illustrates an example of a configuration of a parallel computer system. A parallel computer system 1000 includes a plurality of computing nodes and a plurality of input output (IO) nodes. The computing nodes (comp. nodes) 100a and 100b are information processing apparatuses with no external storage devices. The IO node 100c is an information processing apparatus that includes an external storage device such as an HDD or the like and implements inputting and outputting processes. An example of a hardware configuration of the information processing apparatus will be discussed later with reference to FIG. 2. A plurality of computing nodes are connected with one another over a network 180 that serves as a communication path.

Each IO node is disposed for each set of a predetermined number of computing nodes. Thus, even when data writing processes are implemented on the IO node concerned in concentration by the computing nodes, the data writing processes may be implemented with no wait and hence any delay may not be generated in the operations of the computing nodes.

The number of computing nodes and the number of IO nodes included in the parallel computer system 1000 are not limited to the numbers in the example illustrated in FIG. 1 and scores to hundreds of thousands of nodes may be included.

< Hardware Configuration of Information processing apparatus>

FIG. 2 illustrates an example of a hardware configuration of an information processing apparatus included in a parallel computer system. An information processing apparatus 100 illustrated in FIG. 2 includes an arithmetic processing unit 110, a main memory 120, a communication controller 130, an IO controller 140, an external storage device 150 and a drive unit 160.

An information processing apparatus 100 of the type not including both the external storage device 150 and the drive unit 160 in the above mentioned constitutional elements corresponds to the computing node illustrated in FIG. 1. An information processing apparatus 100 of the type including the external storage device 150 or the drive unit 160 or including both of them corresponds to the IO node illustrated in FIG. 1.

[Main Memory]

The main memory 120 is, for example, a dynamic random access memory (DRAM). The main memory 120 stores therein programs, data, data logs and the like. The programs stored in the main memory 120 include an operating system (OS) as basic software, a program for a computing process which is prepared by coding a function of a computing process which will be discussed later, and a program for a log output process which is prepared by coding a function of a log output process which will be discussed later. In the following discussion, it is supposed that a program the name of which is not specified in particular implies at least one of the OS, the program for the computing process and the program for the log output process.

The data log is data including data representing a time stamp, a name of a program executed by a computing node, a processor core utilization (discussed later), and an event generated owing to execution of the program by the processor core. The data log is used, for example, for calculation of an operating time of the parallel computer system 1000. Execution of the program for the computing process by the arithmetic processing unit 110 implements a function of storing the data log concerned into the main memory 120.

[External storage device]

Examples of the external storage device 150 include a disk array having magnetic disks and a solid state drive (SSD) using a flash memory. The external storage device 150 is allowed to store therein programs and data to be stored in the main memory 120. As discussed above, the external storage device 150 is not included in the computing node but included in the IO node. The programs and data stored in the external storage device 150 are sent from the IO node to the computing node in the form of image files.

[Drive Unit]

The drive unit 160 is a device that reads data out of and writes data into a storage medium 170 such as, for example, a floppy (a registered trade mark) disk, a compact disk read only memory (CD-ROM), a digital versatile disk (DVD). The drive unit 160 includes a motor for rotating the storage medium 170, a head via which data is read out of and written into the storage medium 170. The storage medium 170 is allowed to store therein the programs to be stored in the above mentioned main memory 120. The drive unit 160 reads the program concerned out of the storage medium 170 set to the drive unit 160. The arithmetic processing unit 110 stores the program read out of the storage medium 170 by the drive unit 160 into the main memory 120 and/or the external storage device 150.

[Arithmetic Processing Unit]

The arithmetic processing unit 110 illustrated in FIG. 2 includes processor cores 10 to 40 that perform arithmetic operations, a level 2 (L2) cache controller 50 that controls the operation of a main body of an L2 cache memory (a secondary cache memory), an L2 cache random access memory (RAM) 60 which is the main body of the L2 cache memory, and a memory access controller 70. The arithmetic processing unit 110 is connected with the communication controller 130, the external storage device 150, and the drive unit 160 via the IO controller 140.

The arithmetic processing unit 110 is a device that executes a program stored in the main memory 120 to gain access to the main memory 120 and to arithmetically operate data stored in the accessed main memory 120. Then, the arithmetic processing unit 110 stores data obtained as a result of performance of the arithmetic operation into the main memory 120. Examples of the arithmetic processing unit 110 include a central processing unit (CPU). The arithmetic processing unit 110 executes the programs concerned to implement the computing process and the log output process which will be discussed later.

[Arithmetic Processing Unit: Processor Core]

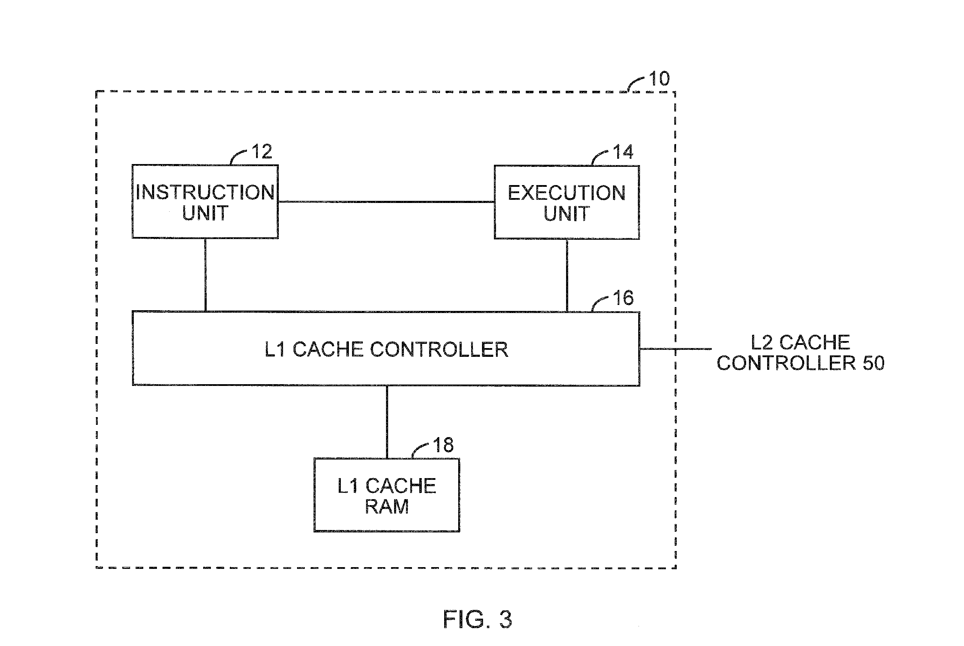

FIG. 3 illustrates an example of a configuration of a processor core. The processor core is a device that implements a function of arithmetic processing of the arithmetic processing unit 110. The processor core 10 includes an instruction unit (IU) 12, an execution unit (EU) 14, a level 1 (L1) cache (primary cache) controller 16, and an L1 cache RAM 18. Although the processor core 10 will be discussed in the discussion of the example illustrated in FIG. 3, other processor cores 20 to 40 illustrated in FIG. 2 implement the same functions as the processor core 10. Although four processor cores are illustrated in FIG. 2, the number of the processor cores is not limited to four and the information processing apparatus 100 may include more than four or less than four processor cores.

The instruction unit 12 decodes an instruction which has been read out of the L1 cache RAM 18. Then, the instruction unit 12 supplies a register address specifying a source register storing an operand used in execution of the instruction and a register address specifying a destination register to store a result of execution of the instruction to the execution unit 14 as an arithmetic operation control signal. The instructions to be decoded include memory access instructions for the L1 cache RAM 18. The memory access instructions include a load instruction and a store instruction. The instruction unit 12 supplies a data request signal to the L1 cache controller 16 to read an instruction concerned out of the L1 cache RAM 18.

The execution unit 14 supplies a result of decoding the memory access instruction or the like including the load instruction or the store instruction to the L1 cache controller 16 as the data request signal. The L1 cache controller 16 supplies data to a register included in the execution unit 14 and specified with the register address in accordance with the load instruction. The execution unit 14 takes the data out of the register, which is included in the execution unit 14 and specified with the register address, and performs an arithmetic operation in accordance with the decoded instruction. The execution unit 14 that has terminated execution of the instruction supplies a signal indicating that performance of the arithmetic operation has been completed to the instruction unit 12 and then receives the next arithmetic operation control signal.

The L1 cache controller 16 of the processor core 10 supplies a cache data request signal (CRQ) to the L2 cache controller 50. Then, the processor core 10 receives a cache data response signal (CRS) notifying completion of performance of the arithmetic operation together with data or an instruction from the L2 cache controller 50. The L1 cache controller 16 is configured to operate independently of the operations of the instruction unit 12 and the execution unit 14. Therefore, the L1 cache controller 16 is allowed to gain access to the L2 cache controller 50 to receive data or an instruction from the L2 cache controller 50 independently of the operations of the instruction unit 12 and the execution unit 14 while the instruction unit 12 and the execution unit 14 are implementing predetermined processes.

[Arithmetic Processing Unit: L2 Cache Memory]

The L2 cache controller 50 illustrated in FIG. 2 requests the L1 cache RAM 18 and the main memory 120 to read (load) data out of them or to write (store) data into them. In addition, the L2 cache controller 50 loads data out of or stores data into the L2 cache RAM 60. The L2 cache controller 50 performs data loading or data storing so as to maintain matching between data stored in an L1 cache memory (for example, the L1 cache RAM 18) or the main memory 120 and data held in an L2 cache memory (for example, the L2 cache RAM 60) in accordance with, for example, the modified exclusive shared invalid (MESI) protocol. In the MESI protocol, for example, the data is stored into the L1 cache memory or the like together with one of four pieces of status information "Modified (M)", "Exclusive (E)", "Shared (S)", and "Invalid (I)".

[Arithmetic Processing Unit: Bus Interface]

A bus interface 51 is a circuit that provides the IO controller 140 with an interface to connect to the arithmetic processing unit 110. In the case that the communication controller 130 performs direct memory access (DMA) discussed later, the communication controller 130 acquires data from or outputs data to the main memory 120 via the bus interface 51 and the memory access controller 70.

[Arithmetic Processing Unit: Memory Access Controller]

The memory access controller 70 is a circuit that controls operations such as an operation of loading data out of the main memory 120, an operation of storing data into the main memory 120, an operation of refreshing the main memory 120 and the like. The memory access controller 70 loads data out of or stores data into the main memory 120 in accordance with the load instruction or the store instruction received from the L2 cache controller 50.

[IO Controller]

The IO controller 140 is a bus bridge circuit that links a front side bus (FSB) with which the arithmetic processing unit 110 is connected and an IO bus with which the communication controller 130, the external storage device 150, and the drive unit 160 are connected. A CPU local bus may be used in place of the FSB. The IO controller 140 is a bridge circuit which functions in compliance with the standards defined for buses such as, for example, accelerated graphics port (AGP), peripheral component interconnect (PCI) Express or the like.

[Communication Controller]

The communication controller 130 is a device which is connected with the network 180 as the communication path to send and receive data over the network 180. Examples of the communication controller 130 include a network interface controller (NIC). The communication controller 130 performs data transfer with a DMA method or a programmed input output (PIO) method.

[Communication Controller: DMA method Based Data Transfer]

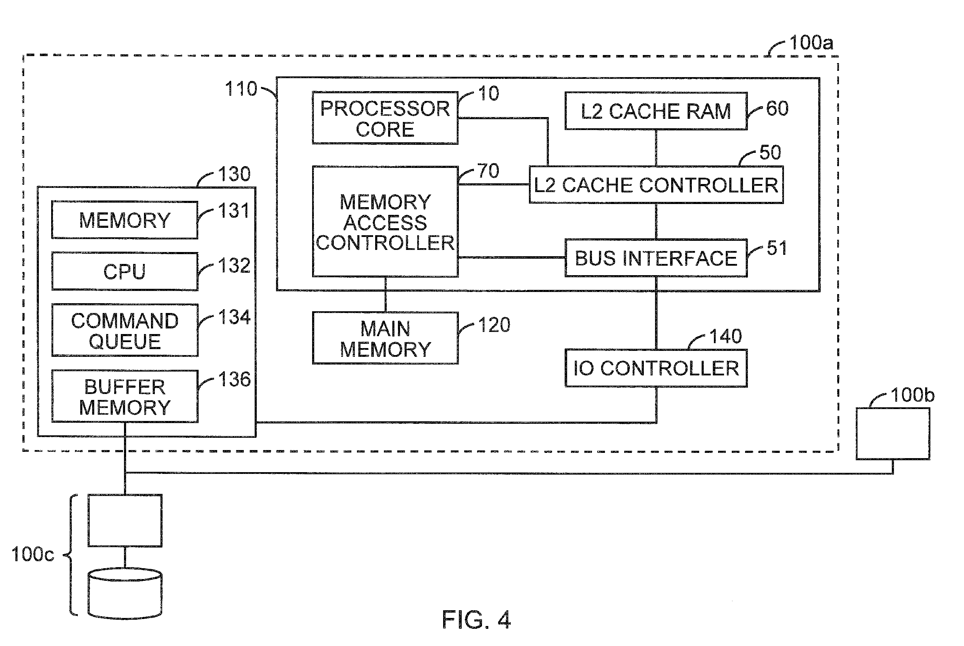

FIG. 4 illustrates an example of a detailed configuration of a communication controller. The computing nodes 100a and 100b illustrated in FIG. 4 correspond to the computing nodes which have been discussed with reference to FIG. 1. The IO node 100c corresponds to the IO node which has been discussed with reference to FIG. 1. The communication controller 130 includes a memory 131, a CPU 132, a command queue 134 and a buffer memory 136. In the case that the communication controller 130 is operated with the DMA method, the communication controller 130 sends data directly to the main memory 120 or acquires data directly from the main memory 120 independently of the operation of the processor core 10. The command queue 134 holds therein a command transferred from the processor core 10. The command includes a destination address which is an address of a destination memory to which data is transferred and a source address which is an address of a source memory from which the data is transferred.

The CPU 132 executes a communication program stored in the memory 131 to implement a function of a communication process complying with a predetermined protocol. The CPU 132 implements the function of the communication process to implement a process of reading a command held in the command queue 134 and transferring data from the source memory at the source address to the destination memory at the destination address. For example, the CPU 132 acquires data from the main memory 120 at a position specified with the source address included in the command and transfers the acquired data to another computing node or the IO node concerned. In addition, the CPU acquires data held in the buffer memory 136 and stores the acquired data in the main memory 120 at a position specified with the destination address included in the command. The buffer memory 136 holds therein data which has been sent from another computing node or data to be sent from the communication controller 130.

In the case of performing data transfer with the DMA method, the processor core 10 implements a process of transferring a command to the command queue 134 and an interruption process upon receiving a notification of completion of the data transfer. When the communication controller 130 is accessing the main memory 120, a conflict may occur between the communication controller 130 and the processor core 10 which is about to access the main memory 120. Thus, in the case that the computing node sends data from the main memory 120 to another computing node or the IO node concerned, the computing process implemented by the processor core 10 may be interrupted or a process for the processor core 10 of gaining access to the main memory 120 may be delayed. Thus, performance of the data transfer by the communication controller 130 with the DMA method may cause a delay in implementation of the computing process by the processor core 10.

[Communication Controller: PIO method Based Data Transfer]

In data transfer performed with the PIO method, the CPU 132 sends the processor core 10 a notification of reception of data upon the data being stored in the buffer memory 136. The processor core 10 suspends implementation of the computing process upon receiving the notification of reception of the data and implements a process of transferring the received data held in the buffer memory 136 to the main memory 120. In sending data from the main memory 120, the processor core 10 designates a memory address of the main memory 120 to read data out of the main memory 120 and stores the read data into the buffer memory 136. As discussed above, in the data transfer with the PIO method, the amount of processes implemented by the processor core 10 is larger than that in the data transfer with the DMA method. Hence in the data transfer with the PIO method, a time delay generated in implementation of the computing process may be longer than that generated in the data transfer with the DMA method.

<Functional Configuration of Computing Node>

[Memory areas in Computing Node]

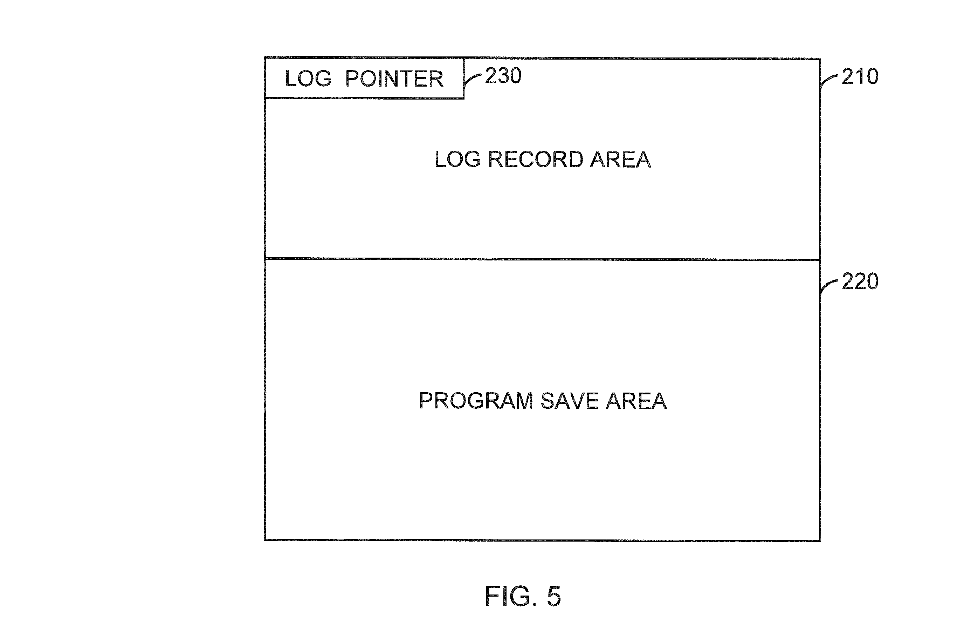

FIG. 5 illustrates an example of memory areas of the main memory 120 of the computing node. In the example of the memory areas illustrated in FIG. 5, the main memory 120 is divided into a log record area 210 and a program save area 220. The log record area 210 stores data logs. The program save area 220 stores programs and data. A starting address of the data logs stored in the log record area 210 is stored in a log pointer 230. The starting address is an address of a point of the log record area 210 storing a data log having the latest time stamp. When the data logs are successively stored in a memory space in descending or ascending order, for example, the starting address may correspond to a memory address at an end of the memory space.

[Computing Process Implemented by Computing Node]

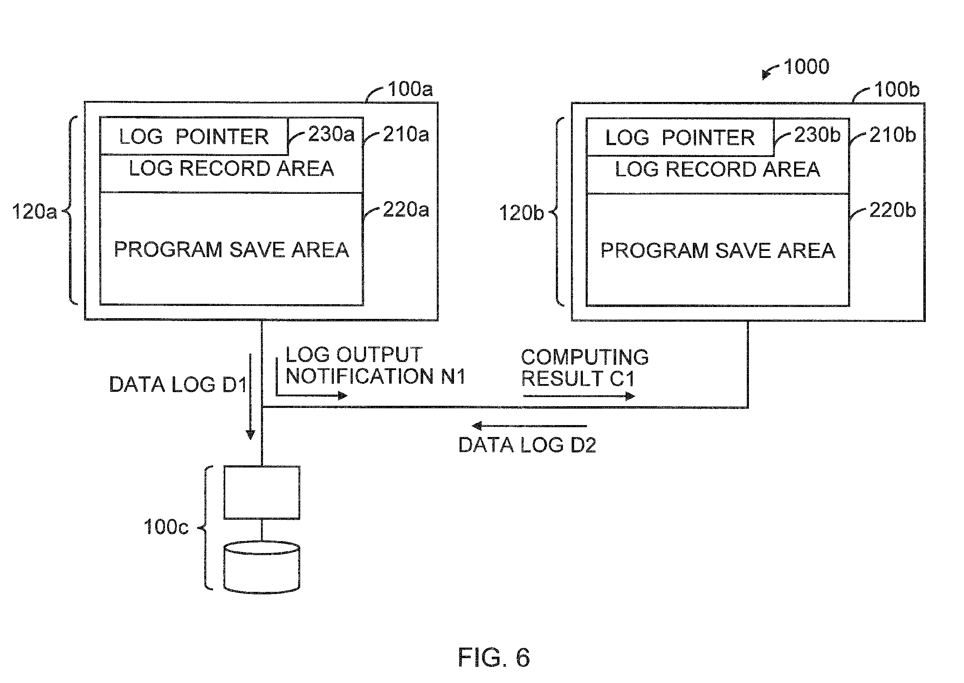

FIG. 6 illustrates an example of computing processes and communication processes implemented by a plurality of computing nodes. The computing nodes 100a and 100b illustrated in FIG. 6 correspond to the computing nodes which have been discussed with reference to FIG. 1. The IO node 100c corresponds to the IO node which has been discussed with reference to FIG. 1. Each of main memories 120a and 120b of the respective computing nodes 100a and 100b illustrated in FIG. 6 include the memory areas of the main memory illustrated in FIG. 5.

The processor cores of the computing nodes 100a and 100b execute programs stored in the main memories 120a and 120b to implement the computing processes allocated to the computing nodes 100a and 100b. Implementation of the computing process allocated to the computing node 100b is controlled to be started in synchronization with termination of the computing process implemented by another computing node 100a. A message passing interface (MPI) may be employed in message communication for realizing the synchronization. The MPI defines, for example, a message for synchronizing a start or an end of a process implemented by each node with a start or an end of a process implemented by another node. Message communication performed to synchronize the computing processes implemented by the plurality of computing nodes with one another may be performed with a "MPI_Barrier" which is a barrier synchronization function included in the MPI functions.

In the example illustrated in FIG. 6, the computing node 100b is controlled to start implementation of the computing process in synchronization with reception of a computing result C1 of the computing process implemented by the computing node 100a.

[Log output process 1]

The processor cores of the computing nodes 100a and 100b execute programs stored in the main memories 120a and 120b, respectively, to implement a log output process relating to execution of the program concerned. The computing node 100a sends a data log D1 to the IO node 100c. The computing node 100a also sends a log output notification N1, which is a notification of output of the data log, to the computing node 100b.

[Log output process 2 Based on Log Size]

The processor core of the computing node 100a stores the computing result C1 obtained by execution of the program stored in a program save area 220a into the program save area 220a and stores a data log relating to execution of the program into a log record area 210a. The processor core of the computing node 100a executes a program stored in the program save area 220a to monitor a size of the data log stored in the log record area 210a. In the monitoring process, for example, when the memory address stored in a log pointer 230a is monitored and matches a predetermined memory address, the processor core of the computing node 100a may determine that the size of the data log has reached a predetermined size. When the size of the data log has exceeded the predetermined size, the computing node 100a may output the data log D1 to the IO node 100c via the communication controller.

The computing node 100a that has output the data log D1 sends, simultaneously with output of the data log C1, the log output notification N1 to another computing node 100b which is connected with the computing node 100a over the network.

Likewise, the computing node 100b stores a computing result obtained by execution of the program stored in a program save area 220b into the program save area 220b and stores a data log relating to execution of the program into a log record area 210b. Upon receiving the log output notification N1 from the computing node 100a, the computing node 100b stops execution of the program and outputs a data log D2 to the IO node 100c.

As discussed above, when output of a data log is generated at one computing node (for example, the computing node 100a) in the plurality of computing nodes, another computing node (for example, the computing node 100b) also operates to output the data log. Thus, in the parallel computer system 1000, when a data log is output from one of the computing nodes, other computing nodes output the data logs at almost the same timings as that at which the data log is output from the one computing node.

[Log output process 3 Based on Error Detection]

When an error has occurred in execution of a program stored in the program save area 220a, the processor core of the computing node 100a may output the data log D1 together with the contents in a main memory 120a to the IO node via the communication controller 130. The above mentioned data output process is a process called a memory dump process. The memory dump process is implemented, in the event of a failure, to save the data stored in the main memory 120a into a disk. The saved data will be used for future analysis of the cause of a system failure in the computing node. The computing node 100a does not include any external storage device and hence outputs the contents in the main memory 120a to the IO node 100c. The computing node 100a also outputs the log output notification N1 to the computing node 100b simultaneously with output of the data log D1 resulted from the memory dump process.

The memory dump is a function implemented by executing the OS, so that it is not resulted from execution of the program for the log output process as discussed above. The program for the log output process causes the processor core to implement a function of sending the log output notification N1 to another computing node when the memory dump process is implemented. As discussed above, output of the data log D1 itself derived from implementation of the memory dump process is implemented by executing the OS, so that it may be allowed not to prepare a program for a process of outputting the data log D1 to be implemented upon the memory dump.

After the log output notification N1 has been received, the computing node 100b operates in the same manner as that in implementation of the above mentioned log output process 1 implemented by the computing node 100b.

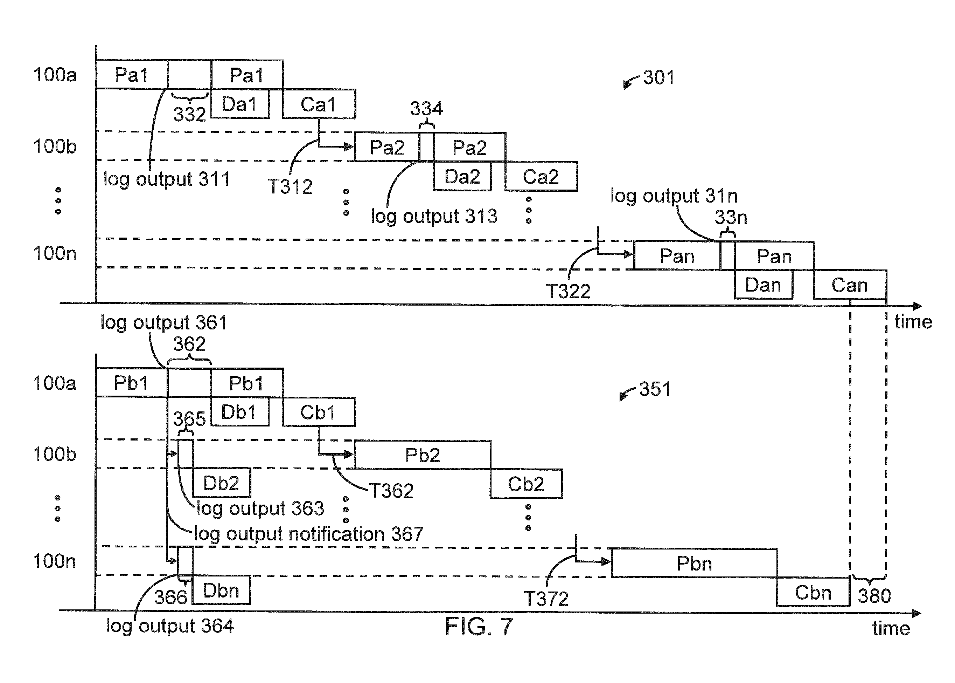

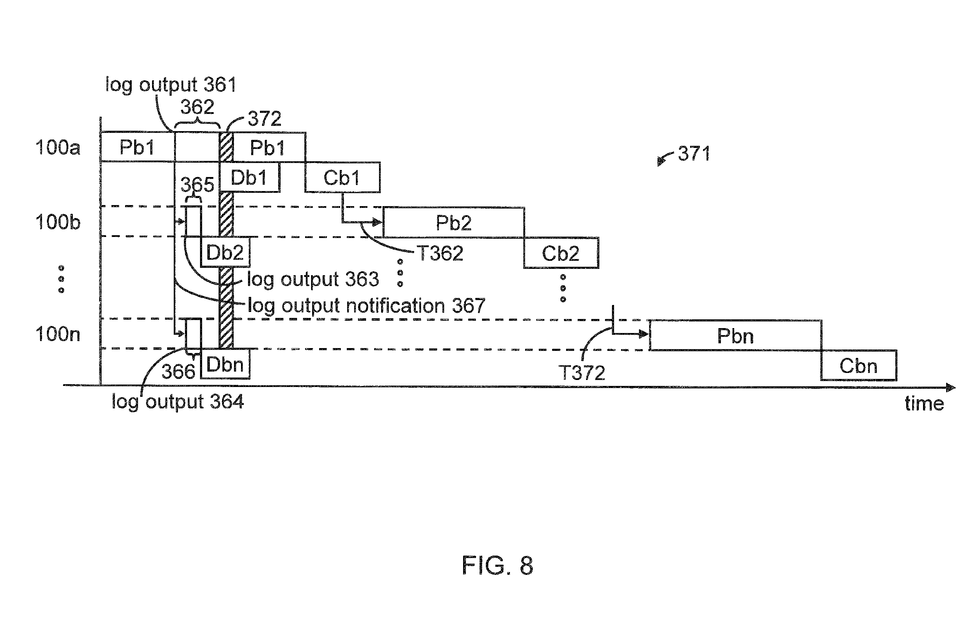

FIGs. 7 and 8 illustrate examples of time charts for the log output processes implemented by the plurality of computing nodes. Next, the time charts for the log output processes illustrated in FIG. 6 will be discussed with reference to FIGs. 7 and 8.

[Case 1: Random Output of Data Logs]

A time chart 301 illustrated in FIG. 7 indicates a case in which the respective computing nodes 100a, 100b... and 100n output the data logs at random times. Log outputs 311, 313... and 31n are made when a predetermined amount of data logs has been accumulated in the log record area or when the memory dump has been performed in the event of a failure.

As discussed in the discussion of the data transfer performed by the communication controller with reference to FIG. 4, the data transfer is performed by interrupting on-going computing processes Pa1, Pa2... and Pan implemented by the processor cores regardless of whether the DMA method or the PIO method is adopted. As a result, delays 332, 334... and 33n may be generated as a result of the log outputs 311, 313... and 31n. In addition, log transfer processes (sending data log) Da1, Da2... and Dan are implemented as a result of the log outputs 311, 313... and 31n.

The computing node 100a that has completed implementation of the computing process Pa1 implements a computation result transfer process (sending a result of implementation of the allocated computing process) Ca1 to the computing node 100b. The computing node 100b starts implementation of the computing process Pa2 in synchronization with a reception T312 of the computational result sent from the computing node 100a in the computation result transfer process Ca1, and implements a computation result transfer process Ca2.

The computing node 100n starts implementation of the computing process Pan in response to a reception T322 of a computation result sent from a computing node which implements the computing process next preceding the computing node 100n and implements a computation result transfer process Can.

As discussed above, when the delays 332, 334... and 33n resulted from the log outputs output from the plurality of computing nodes 100a, 100b... and 100n are generated at different timings, a delay time which is obtained by adding the delays 332, 334... and 33n together becomes a delay in process time that the parallel computer system 1000 takes for implementation of the computing processes.

[Case 2: Synchronized Output of Data Logs]

A time chart 351 illustrated in FIG. 7 indicates a case in which the respective computing nodes 100b... and 100n output the data logs in synchronization with outputting of the data log from the computing node 100a. A log output 361 is made when a predetermined amount of data logs has been accumulated in the log record area or when the memory dump has been performed in the event of a failure. Log outputs 363 and 364 are made when the respective computing nodes 100b... and 100n have received a log output notification 367 from the computing node 100a.

The computing node 100a sends other computing nodes 100b... and 100n the log output notification 367 together with a log output 361. Upon receiving the log output notification 367, the computing nodes 100b... and 100n perform log output 363... 364 from the main memories included therein.

The communication controller of the computing node 100a implements a log transfer process Db1. The computing node 100a which has completed implementation of a computing process Pb1 implements a computation result transfer process Cb1 to the computing node 100b.

The computing node 100b starts implementation of a computing process Pb2 in synchronization with a reception T362 of the computation result sent from the computing node 100a in the computation result transfer process Cb1, and implements a computation result transfer process Cb2. The computing node 100n starts implementation of a computing process Pbn in synchronization with reception T372 of a computation result sent from a computing node which implements the computing process next preceding the computing node 100n and implements a computation result transfer process Cbn.

As discussed above with reference to FIG. 4, the data transfer is performed by interrupting the on-going computing process Pa1 (see the time chart 301 in FIG. 7) and the on-going computing process Pb1 (see the time chart 351 in FIG. 7) implemented by the processor core regardless of whether the DMA method or the PIO method is adopted. As a result, a delay 332 may be generated when the log output 311 is made and a delay 362 may be generated when a log output 361 is made. Likewise, delays 365 and 366 may be generated when log outputs 363 and 364 are made. As illustrated in the time chart 351, the delays 365 and 366 which are generated owing to the log outputs 363 and 364 are hidden in the delay 362.

As for a total computing process time taken to implement the computing process by the parallel computer system 1000, FIG. 7 indicates that the total computing process time in the time chart 351 is shorter than that in the time chart 301 by a time difference 380. In the example illustrated in the time chart 351, the delays 362, 365, and 366 which are generated owing to log outputs are superposed on one another by making computing nodes other than the computing node 100a output the data logs in synchronization with the log output 361 from the computing node 100a. In other words, the delays are not accumulated unlike the case illustrated in the time chart 301 and the delays generated at the respective computing nodes are hidden in one delay and hence the delay time of the total computing process time of the parallel computer system 1000 may be reduced.

A time chart 371 illustrated in FIG. 8 indicates a case in which the respective computing nodes 100b... and 100n output data logs in synchronization with outputting of a data log from the computing node 100a as in the case in the time chart 351. The process illustrated in the time chart 371 differs from that in the time chart 351 in that after one computing node has output a data log, a synchronization process 372 is implemented so as to start (resume) implementation of the computing process which has been allocated to the computing node concerned in synchronization with the operations of other computing nodes.

Before the data logs are output, the respective computing nodes synchronize processes that the respective computing nodes are carrying forward in parallel with one another, for example, by sending and receiving messages complying with the MPI. The data logs are output by interrupting the on-going computing processes implemented in parallel with one another. In the log output processes illustrated in the time charts 301 and 351, a delay in each computing process differs for different computing nodes for reasons that the amount of data logs differs for different computing nodes. The delays illustrated in the time chart 301 are generated in the respective computing nodes at different timings. On the other hand, in the processes illustrated in the time chart 351, computing nodes other than the computing node 100a output the data logs by using the log output 361 from the computing node 100a as a trigger, so that the operations of the plurality of computing nodes may be synchronized with one another at a time. Thus, in the time chart 371, implementation of the computing processes is started (resumed) after the operations of the respective computing nodes are synchronized with one another by implementing the synchronization process 372 so as to avoid such a situation that delays generated when the data logs are output adversely affect the on-going computing processes carried forward in parallel with one another.

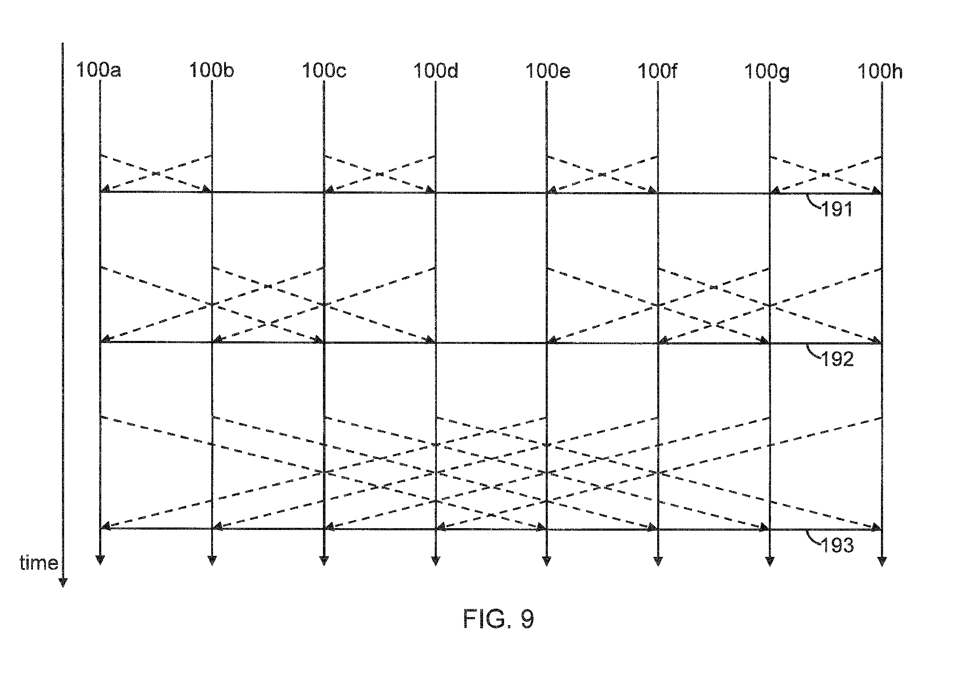

FIG. 9 illustrates an example of a synchronization process of computing nodes implemented after the data logs have been output. Each computing node executes a program for a log output process to implement a synchronization process of the computing nodes. As an example of a manner of implementing the synchronization process of the computing nodes after the data logs have been output, a butterfly barrier synchronization method is adopted. In the butterfly barrier synchronization method, a synchronous barrier used for synchronization is prepared in each computing process allocated to each computing node. When the computing processes implemented by all the computing nodes reach the synchronous barriers, each processor core is allowed to proceed to the next computing process beyond the synchronous barrier. In the example illustrated in FIG. 9, butterfly barrier synchronization is performed by eight computing nodes 100a... and 100h. In the example illustrated in FIG. 9, dashed arrows indicate messages to be exchanged between computing nodes.

Among the computing nodes 100a... and 100h illustrated in FIG. 9, each pair of adjacent computing nodes exchange messages with each other to implement a first barrier synchronization process 191. Next, each computing node of the pairs of the computing nodes exchanges messages with its corresponding computing node in an adjacent pair of computing nodes to implement a second barrier synchronization process 192. Then, each computing node of the quads of the computing nodes exchanges messages with its corresponding computing node in an adjacent quad of the computing nodes to implement a third barrier synchronization process 193. When each computing node has received three (=log₂ 8) messages, it is determined that all the computing nodes have reached the barriers and then each computing node starts (resumes) implementation of the computing process which has been allocated thereto.

In the barrier synchronization, for example, a data area included in the buffer memory 136 of the communication controller 130 of one computing node is synchronized with data areas included in other computing nodes. For example, in the case that eight computing nodes are installed, each computing node prepares three data areas for respectively accepting three messages sent from other computing nodes. Then, when all the three data areas have been filled with the messages, it is determined that all the computing nodes have reached the barriers. The number of messages required for barrier synchronization is a logarithm of the number of computing nodes to the base 2 (two). Therefore, even when the number of computing nodes is, for example, 80,000, barrier synchronization of all the computing nodes may be confirmed using 17 (seventeen) messages. As discussed above, in the butterfly barrier synchronization method, the synchronization of the operations of all the nodes may be performed with a small number of messages even in a large scale parallel computer system including a huge number of nodes.

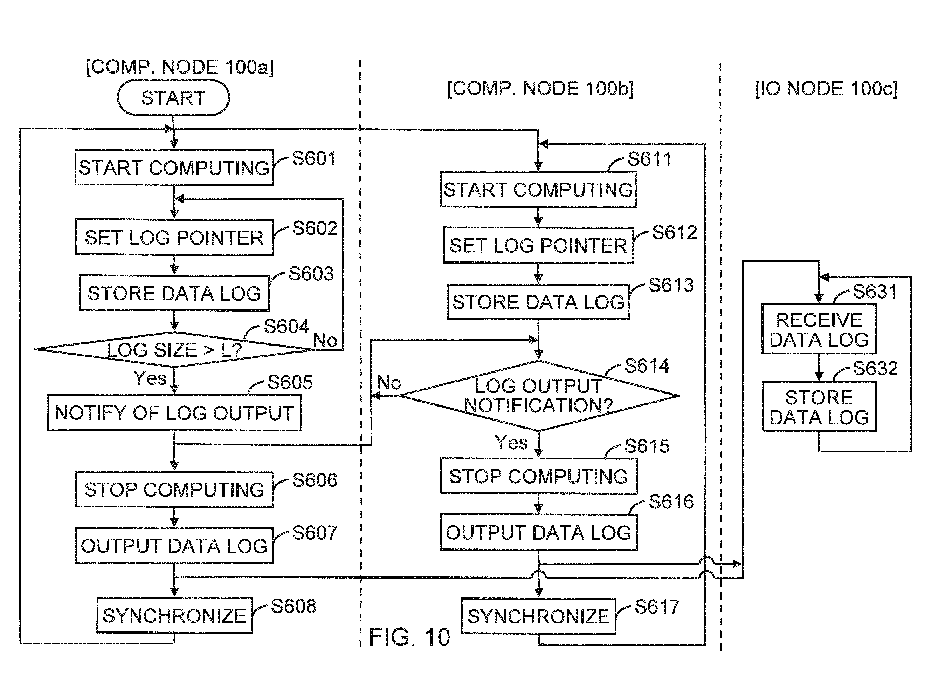

FIG. 10 illustrates an example of an operation flow of a log output process based on the size of each data log. In the operation flow of the log output process illustrated in FIG. 10, operations S601 to S603 discussed later are implemented by executing a program for a computing process by each computing node. Other operations are implemented by executing a program for a log output process by each computing node.

[Operation Flow of Computing Node 100a]

In operation S601, the computing node 100a starts execution of the program for the computing process which has been allocated thereto.

In operation S602, the computing node 100a sets a starting address of the log record area 210a into the log pointer 230a.

In operation S603, the computing node 100a stores a data log relating to implementation of the computing process into the log record area 210a and writes a memory address of a position where the data log has been saved into the log pointer 230a.

In operation S604, the computing node 100a determines whether a size (hereinafter, referred to as a log size) of the data log which has been stored into the log record area 210a exceeds a predetermined limit value L. In other words, the computing node 100a monitors the memory address stored in the log pointer 230a and determines whether the memory address exceeds a predetermined memory address. Although in operation S604 illustrated in FIG. 10, it is determined whether the log size exceeds the limit value L, it may be determined whether the log size is more than or equal to the limit value L.

When the log size does not exceed the limit value L ("No" in operation S604), the computing node 100a returns the process to operation S602.

In operation S605, when the log size exceeds the limit value L ("Yes" in operation S604), the computing node 100a sends a log output notification to other computing nodes.

In operation S606, the computing node 100a stops implementation of the computing process.

In operation S607, the computing node 100a outputs the data log stored in the log record area 210a and transfers the data log to the IO node 100c.

In operation S608, the computing node 100a which has terminated outputting of the data log performs barrier-synchronization with other computing nodes as discussed with reference to FIGs. 8 and 9. Then, the computing node 100a returns the process to operation S601.

[Operation Flow of Computing Node 100b]

In operation S611, the computing node 100b starts execution of a program for a computing process which has been allocated thereto.

In operation S612, the computing node 100b sets a starting address of the log record area 210b into the log pointer 230b.

In operation S613, the computing node 100b stores a data log relating to implementation of the computing process into the log record area 210b and writes a memory address of a position where the data log has been saved into the log pointer 230b.

In operation S614, the computing node 100b determines whether a log output notification has been received from the computing node 100a. When the log output notification has not been received ("No" in operation S614), the computing node 100b waits for reception of the log output notification.

In operation S615, when the log output notification has been received ("Yes" in operation S614), the computing node 100b stops implementation of the computing process.

In operation S616, the computing node 100b outputs the data log stored in the log record area 210b and transfers the data log to the IO node 100c.

In operation S617, the computing node 100b which has terminated outputting of the data log performs barrier-synchronization with other computing nodes as discussed with reference to FIGs. 8 and 9. Then, the computing node 100b returns the process to operation S611.

[Operation Flow of IO node 100c]

In operation S631, the IO node 100c receives the data log from the computing node 100a or the computing node 100b.

In operation S632, the IO node 100c saves the received data log into the external storage device 150.

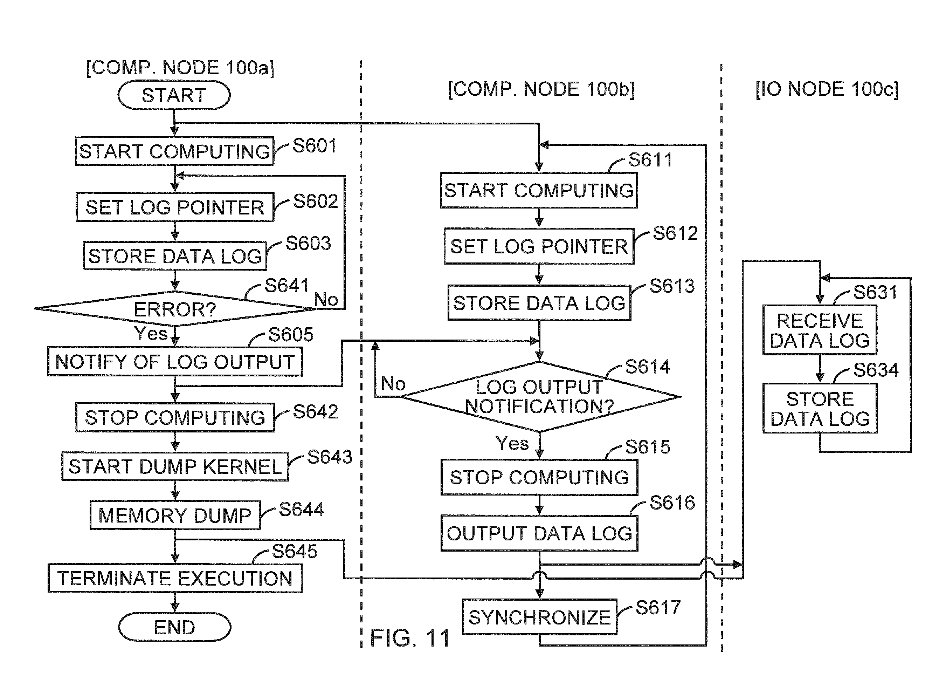

FIG. 11 illustrates an example of an operation flow of a log output process based on error detection. The operation flow of the log output process illustrated in FIG. 11 is different from the operation flow of the log output process illustrated in FIG. 10 in terms of the operation flow of the process implemented by the computing node 100a. The operation flows of the processes implemented by the computing node 100b and the IO node 100c illustrated in FIG. 11 are the same as the operation flows of the processes implemented by the computing node 100b and the IO node 100c illustrated in FIG. 10. Thus, the operation flow of the process implemented by the computing node 100a will be discussed hereinafter.

In the operation flow of the log output process illustrated in FIG. 11, operations S601 to S603 are implemented by executing a program for a computing process by the computing node. Other operations are implemented by executing a program for a log output process by the computing node.

In operation S601, the computing node 100a executes the program to starts execution of the program for the computing process which has been allocated thereto.

In operation S602, the computing node 100a sets the starting address of the log record area 210a into the log pointer 230a.

In operation S603, the computing node 100a stores a data log relating to implementation of the computing process into the log record area 210a and writes the memory address of a position where the data log has been saved into the log pointer 230a.

In operation S641, the computing node 100a determines whether an error has occurred in the computing node 100a. When any error has not occurred in the computing node 100a ("No" in operation S641), the computing node 100a returns the process to operation S602.

In operation S605, when any error has occurred in the computing node 100a ("Yes" in operation S641), the computing node 100a sends a log output notification to other computing nodes.

In operation S642, the computing node 100a stops implementation of the computing process.

In operation S643, the computing node 100a executes a dump kernel included in the OS.

In operation S644, the computing node 100a outputs the data stored in the main memory 120a as a dump file and transfers the dump file to the IO node 100c.

In operation S645, the computing node 100a stops execution of the program to terminate the operation flow of the log output process.

The reason why the computing node 100a, in which the error has occurred, stops execution of the program in operation S645 is to avoid such a situation that an erroneous result of computation is output from the computing node in which the error has occurred. In the parallel computer system 1000 including scores of thousands of nodes, it may be possible to continuously implement the computing process by allocating the computing process of one computing node to another computing node even when the operation of the one computing node is stopped owing to an error.

The implementation of the computing process is stopped (operations S606 and S615) in the operation flows illustrated in FIGs. 10 and 11 in order to implement the synchronization process (operations S608 and S617). The synchronization process (operations S608 and S617) corresponds to the synchronization process 372 in the time chart 371 illustrated in FIG. 8. In the case that the synchronization process is not implemented as illustrated in the time chart 351 illustrated in FIG. 7, it may be allowed not to stop (operations S606 and S615) implementation of the computing process and not to implement (operations S608 and S617) the synchronization process.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiments of the present invention have been discussed in detail, it should be understood that the various changes, substitutions, and alterations could be made hereto without departing from the spirit and scope of the invention.

## Claims

1. A parallel computer system comprising:
a first information processing apparatus including:
a first storage device that stores a first program in a first area of the first storage device, and
a first arithmetic processing unit that stores a first information regarding an execution of the first program in a second area of the first storage device, and sends a first notification of output of the first information when the first arithmetic processing unit outputs the first information from the first storage device;
a second information processing apparatus including:
a second storage device that stores a second program in a third area of the second storage device, and
a second arithmetic processing unit that stores a second information regarding execution of the second program in a fourth area of the second storage device, and outputs the second information when the second arithmetic processing unit receives the first notification from the first information processing apparatus; and a third information processing apparatus including:
a third storage device, and
a third arithmetic processing unit that stores the first information received from the first information processing apparatus and the second information received from the second information processing apparatus in the third storage device.

2. The parallel computer system according to claim 1, wherein
the first arithmetic processing unit monitors a data size of the first information stored in the second area, and outputs the first information when the data size of the first information exceeds a predefined data size.

3. The parallel computer system according to claim 1 or 2, wherein
the first arithmetic processing unit sends data dumped from the first area and the second area to the third information processing apparatus when an error occurs in the execution of the first program, and sends the first notification of the occurred error to the second information processing apparatus, and
the third arithmetic processing unit stores the dumped data received from the first information processing apparatus in the third storage device.

4. The parallel computer system according to any of claims 1 to 3,
wherein
the first arithmetic processing unit
stops the execution of the first program when the first arithmetic processing unit outputs the first information,
sends a second notification of completion of the output of the first information to the second information processing apparatus when the first arithmetic processing unit completes the output of the first information, and
resumes the execution of the first program when the first arithmetic processing unit receives a third notification of completion of the output of the second information from the second information processing apparatus, and
the second arithmetic processing unit
stops the execution of the second program when the second arithmetic processing unit outputs the second information,
sends the third notification to the first information processing apparatus when the second arithmetic processing unit completes the output of the second information, and
resumes the execution of the second program when the second arithmetic processing unit receives the second notification from the first information processing apparatus.

5. A method for controlling a parallel computer system including a first information processing apparatus having a first storage device, a second information processing apparatus having a second storage device, and a third information processing apparatus having a third storage device, the method comprising:
storing, by the first information processing apparatus, first information regarding execution of a first program stored in a first area of the first storage device in a second area of the first storage device;
sending to the second information processing apparatus, by the first information processing apparatus, a first notification of output of the first information when the first arithmetic processing unit outputs the first information from the first storage device;
storing, by the second information processing apparatus, second information regarding execution of a second program stored in a third area of the second storage device in a fourth area of the second storage device;
outputting, by the second information processing apparatus, the second information when the second arithmetic processing unit receives the first notification from the first information processing apparatus; and
storing, by the third information processing apparatus, the first information received from the first information processing apparatus and the second information received from the second information processing apparatus in the third storage device.

6. The method according to claim 5, further comprising:
monitoring, by the first information processing apparatus, a data size of the first information stored in the second area, wherein
the first information processing apparatus outputs the first information when the data size of the first information exceeds a predefined data size.

7. The method according to claim 5 or 6, further comprising:
sending, by the first information processing apparatus, data dumped from the first area and the second area to the third information processing apparatus when an error occurs in the execution of the first program;
sending, by the first information processing apparatus, the first notification of the occurred error to the second information processing apparatus; and
storing, by the third information processing apparatus, the dumped data received from the first information processing apparatus in the third storage device.

8. The method according to any of claims 5 to 7, further comprising:
stopping, by the first information processing apparatus, the execution of the first program when the first arithmetic processing unit outputs the first information;
sending, by the first information processing apparatus, a second notification of completion of the output of the first information to the second information processing apparatus when the first arithmetic processing unit completes the output of the first information;
stopping, by the second information processing apparatus, the execution of the second program when the second arithmetic processing unit outputs the second information;
sending, by the second information processing apparatus, a third notification of completion of the output of the second information to the first information processing apparatus when the second arithmetic processing unit completes the output of the second information;
resuming, by the first information processing apparatus, the execution of the first program when the first arithmetic processing unit receives the third notification; and
resuming, by the second information processing apparatus, the execution of the second program when the second arithmetic processing unit receives the second notification.

9. A program causing a parallel computer system to execute a method for controlling the parallel computer system, the parallel computer system including a first computer having a first storage device, a second computer having a second storage device, and a third computer having a third storage device, the method comprising:
storing, by the first computer, first information regarding execution of a first program stored in a first area of the first storage device in a second area of the first storage device;
sending to the second computer, by the first computer, a first notification of output of the first information when the first computer outputs the first information from the first storage device;
storing, by the second computer, second information regarding execution of a second program stored in a third area of the second storage device in a fourth area of the second storage device;
outputting, by the second computer, the second information when the second computer receives the first notification from the first computer; and
storing, by the third computer, the first information received from the first computer and the second information received from the second computer in the third storage device.

10. The program according to claim 9, the method further comprising:
monitoring, by the first computer, a data size of the first information stored in the second area, wherein
the first computer outputs the first information when the data size of the first information exceeds a predefined data size.

11. The program according to claim 9 or 10, the method further comprising:
sending, by the first computer, dumped data dumped from the first area and the second area to the third computer when an error occurs in the execution of the first program;
sending, by the first computer, the first notification of the occurred error to the second computer; and
storing, by the third computer, the dumped data received from the first computer in the third storage device.

12. The program according to any of claims 9 to 11, the method further comprising:
stopping, by the first computer, the execution of the first program when the first computer outputs the first information;
sending, by the first computer, a second notification of completion of the output of the first information to the second computer when the first computer completes the output of the first information;
stopping, by the second computer, the execution of the second program when the second computer outputs the second information;
sending, by the second computer, a third notification of completion of the output of the second information to the first computer when the second computer completes the output of the second information;
resuming, by the first computer, the execution of the first program when the first computer receives the third notification; and
resuming, by the second computer, the execution of the second program when the second computer receives the second notification.
